**Europäisches Patentamt**

(19) **European Patent Office**

**Office européen des brevets**

(11) Numéro de publication: **0 110 760**
**A1**

(12) # DEMANDE DE BREVET EUROPEEN

(21) Numéro de dépôt: **83402178.4**

(22) Date de dépôt: **10.11.83**

(51) Int. Cl.³: **D 06 F 43/08, G 21 F 9/00, G 21 F 9/08, B 01 D 3/00**

---

(30) Priorité: **19.11.82  FR 8219457**

(43) Date de publication de la demande: **13.06.84**
**Bulletin 84/24**

(84) Etats contractants désignés: **DE GB IT NL**

(71) Demandeur: **Privat, Michel, 6, rue Monsigny, F-75002 Paris (FR)**

(72) Inventeur: **Privat, Michel, 6, rue Monsigny, F-75002 Paris (FR)**

(74) Mandataire: **Netter, André et al, Cabinet NETTER 40, rue Vignon, F-75009 Paris (FR)**

(54) **Procédé et installation de nettoyage et décontamination particulaire de vêtements, notamment de vêtements contaminés par des particules radioactives.**

(57) L'invention concerne un procédé et une installation de nettoyage et décontamination particulaire de vêtements, à circuit de régénération du solvant du type à appareil de distillation (17, 18), condenseur (19), séparateur d'eau (23), réservoir de solvant (25) et circuit de récupération du solvant entraîne par l'air de séchage du type à condenseur (51).

Selon l'invention, chaque conteneur de solvant (19, 23, 25, 51) est relié indépendamment au bouilleur (17) à des fins de nettoyage; les différents conteneurs (19, 23, 25, 10, 51) sont par ailleurs dans une disposition relative telle que le solvant circule par gravité du condenseur au bouilleur et de chaque conteneur au bouilleur; le bouilleur est prévu amovible pour éventuellement être jeté après avoir été rempli de résidus de solvant et déchets usés.

Application particulière à la décontamination nucléaire.

ACTORUM AG

EP 0 110 760 A1

1

## Procédé et installation de nettoyage et décontamination particulaire de vêtements, notamment de vêtements contaminés par des particules radioactives

L'invention concerne un procédé de nettoyage et décontamination particulaire de vêtements et s'applique particulièrement aux vêtements contaminés par des particules radioactives.

Il est actuellement nécessaire, et pour un nombre d'activités industrielles et de recherche toujours plus important comme, par exemple, l'électronique, la mécanique de précision, l'optique, la pharmacie, l'hospitalier ..., de disposer de tenues vestimentaires exemptes de particules ou de fibres détachables susceptibles de se libérer dans les salles de travail dites "propres" ou "ultra-propres".

Par ailleurs, en ce qui concerne les activités de l'industrie nucléaire, les tenues vestimentaires peuvent, après service, être contaminées par des particules radioactives, dangereuses, et doivent donc être décontaminées.

Dans certains cas, les tenues vestimentaires demandent à être soumises à une décontamination particulaire avant utilisation dans la salle de travail ainsi qu'après utilisation, lorsque le travail peut se dérouler en atmosphère radioactive.

Actuellement, les procédés et installations de nettoyage et décontamination de vêtements qui fournissent les meilleurs résultats sont ceux utilisant des solvants de nettoyage à sec, solvants qui présentent l'avantage de pouvoir être régénérés et de permettre en une seule opération aussi bien le nettoyage, c'est-à-dire l'enlèvement des souillures se déposant normalement en raison du port du vêtement, que la décontamination, à savoir un nettoyage en quelque sorte plus poussé pour retirer particules et fibres détachables.

Les solvants qui donnent actuellement les meilleurs résultats sont le monofluorotrichlorométhane, connu sous la dénomination R 11, et surtout le trichlorotrifluoroéthane connu sous la dénomination R 113.

D'une manière générale, deux types d'installations sont actuellement utilisées, comprenant une machine à tambour dans lequel les vêtements sont introduits, et fonctionnant soit à la pression atmosphèrique, soit sous vide.

Mais, toutes ces installations présentent des inconvénients qui n'ont pu jusqu'ici être surmontés de façon satisfaisante et, notamment, à l'égard des points suivants :

- ces installations utilisent des circuits parfois complexes avec un nombre d'éléments constitutifs élevé, dont l'entretien et surtout le nettoyage ne peuvent être assurés de façon parfaite, notamment pour les installations fonctionnant sous vide dont la fiabilité, par ailleurs, n'est pas certaine ;

- l'étanchéité des divers éléments et conduits constitutifs des circuits de circulation des solvants n'est pas assurée de façon satisfaisante, ce qui peut présenter des risques non négligeables en matière de décontamination nucléaire;

- aucune installation n'a été proposée dont les parties contaminées soient correctement séparées des parties propres, et reliées respectivement à des aires ou espaces contaminés

0110760

séparés d'aires ou espaces propres, ce qui pourtant est indispensable, notamment en matière de décontamination nucléaire ;

- les installations sont telles qu'elles présentent une multitude d'endroits d'accrochage des particules ou déchets contaminés, ce qui rend le nettoyage correct de l'installation très difficile si ce n'est impossible et présente donc des risques non négligeables en matière de décontamination nucléaire.

C'est, en conséquence, un but de l'invention de fournir un procédé de nettoyage et décontamination particulaire de vêtements, ainsi qu'une installation qui pallient les inconvénients rappelés ci-dessus.

C'est, notamment, un but de l'invention de fournir un procédé et une installation qui, fonctionnant sur un principe très simple, permettent un entretien et un nettoyage très faciles des diverses parties de l'installation.

C'est encore un but de l'invention de fournir un procédé et une installation de nettoyage et décontamination de vêtements qui permettent de limiter fortement le nombre d'éléments constitutifs du circuit de circulation du solvant, supprimant ainsi les risques de mauvaise étanchéité et/ou les risques d'accrochage en de multiples points des déchets contaminés.

C'est également un but de l'invention de fournir un procédé et une installation de nettoyage et décontamination de vêtements qui permettent de concentrer en un point unique les déchets contaminés.

C'est aussi un but de l'invention de fournir une installation telle que toutes ses parties "contaminées" puissent être facilement séparées de ses parties "propres".

4

C'est aussi un but de l'invention de fournir un procédé et une installation de nettoyage et décontamination de vêtements qui puissent fournir des vêtements d'une qualité de propreté répondant aux critères les plus sévères des normes actuelles, notamment de la norme américaine ASTM, ou même d'une qualité de propreté supérieure.

Le procédé selon l'invention, du type à milieu solvant de nettoyage à sec et fonctionnant sous la pression atmosphérique, selon lequel le solvant circule en circuit fermé et est purifié par distillation entre la sortie et l'entrée de la cuve de nettoyage, l'air de séchage circulant également en circuit fermé et étant séparé du solvant entre la sortie et l'entrée de la cuve, est caractérisé en ce qu'on nettoie indépendamment, quand le besoin s'en fait sentir, chaque conteneur de solvant de l'un ou l'autre des circuits, en vidangeant ledit conteneur directement au poste de distillation et en remplissant ledit conteneur de solvant distillé.

Les déchets contaminés obtenus au cours de plusieurs cycles de nettoyage et de décontamination sont collectés en un seul et même point avant d'être éliminés. Par ailleurs, la circulation du solvant, en dehors du poste de distillation, s'effectue uniquement par gravité.

En outre, l'invention prévoit de faire subir au solvant distillé une filtration, en dehors de tout cycle de nettoyage de vêtements, avant de l'introduire dans la cuve pour une opération de nettoyage.

L'installation selon l'invention, qui comprend une cuve à tambour de nettoyage interposée d'une part dans un circuit de régénération du solvant du type à appareil de distillation, condenseur, séparateur d'eau, réservoir de solvant et, d'autre part, dans un circuit de récupération du solvant entraîné par l'air de séchage, du type à condenseur, est caractérisée en ce que chaque conteneur de solvant est relié indépendamment

et directement, avec interposition de vannes, au bouilleur de l'appareil de distillation à des fins de nettoyage indépendant.

Le circuit de récupération du solvant comprend avantageusement une batterie réfrigérée assurant la condensation des vapeurs de solvant, le récupérateur de solvant étant relié à l'amont du séparateur d'eau du circuit de régénération du solvant.

L'installation comprend également, dans le circuit de régénération du solvant, un réservoir de récupération d'eau disposé en aval du séparateur d'eau et qui est directement relié au bouilleur.

Selon une autre caractéristique de l'invention, le bouilleur est monté amovible sur la colonne de distillation.

Dans une réalisation avantageuse, le bouilleur comprend une cuve de collecte des solvants usés et des déchets contaminés indépendante des moyens de chauffage. Ces derniers peuvent être constitués par une cuve à bain-marie.

Si les solvants usés et les déchets ne constituent pas une contamination trop importante, le même bouilleur peut être réutilisé après qu'il a subi un nettoyage approprié. Si, par contre, la contamination est trop importante, l'invention prévoit de jeter le bouilleur après qu'on y a rassemblé tous les déchets contaminés.

Selon l'invention, l'installation peut être complétée par un dispositif de filtration à plusieurs cartouches de porosité décroissante interposé entre le réservoir de solvant distillé et la cuve de nettoyage et de décontamination. Les cartouches sont alors avantageusement en fibres de borosilicate.

Selon l'invention, par ailleurs, les éléments des circuits de régénération et de récupération du solvant sont rassemblés dans un même module destiné à rester en salle contaminée, la cuve de lavage et ses départs et retours de canalisations diverses constituant un deuxième module à deux ouvertures dont seule l'ouverture de déchargement des vêtements est destinée à être en communication avec la salle propre.

L'invention est décrite ci-après plus en détail en référence au dessin annexé dans lequel :

- la figure 1 est une vue schématique d'une installation selon l'invention ;

- la figure 2 est une vue schématique d'un dispositif de filtration pouvant être optionnellement intégré à l'installation ;

- la figure 3 est une vue en coupe transversale d'un bouilleur ;

- la figure 4 est une vue en coupe partielle, dans un plan perpendiculaire à la vue précédente, du bouilleur selon l'invention ;

- la figure 5 est une vue schématique de deux bouilleurs assemblés l'un à l'autre ;

- la figure 6 est une vue schématique en coupe d'un autre bouilleur ; et

- la figure 7 est une vue schématique partielle d'un autre système de fixation du bouilleur.

L'installation de nettoyage et décontamination particulaire de vêtements selon l'invention est particulièrement

7

0110760

destinée à la décontamination nucléaire.

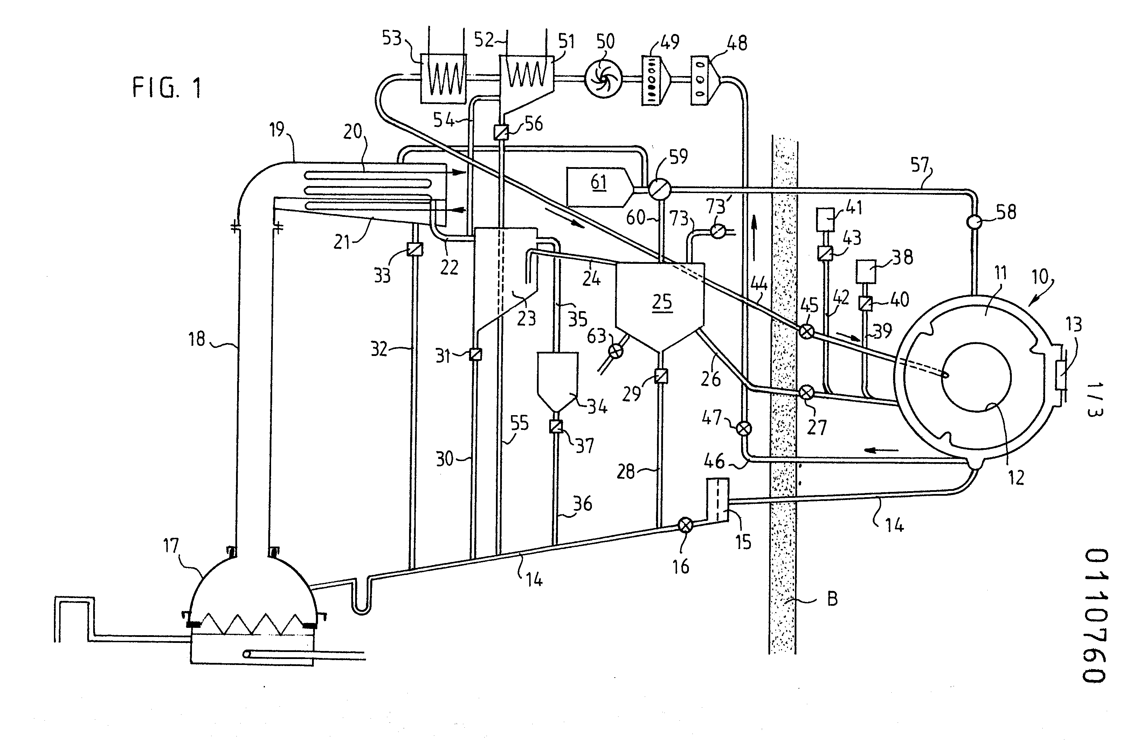

Elle comprend (figure 1) une cuve 10 à tambour intérieur 11 dans laquelle sont introduits les vêtements, cette cuve présentant deux ouvertures, l'une 12 en paroi frontale et l'autre 13 en paroi latérale, ces deux ouvertures étant distinctes l'une de l'autre et servant limitativement l'une à l'introduction des vêtements sales et contaminés, et l'autre au déchargement des vêtements propres et décontaminés.

Un conduit 14, qui débouche en partie inférieure de la cuve et dans lequel sont interposés un filtre 15 à larges mailles destiné à retenir les matières solides de grandes dimensions ou "filtre à boutons", ainsi qu'une vanne 16 de vidange de la cuve, parvient au bouilleur 17 d'un appareil de distillation. Ce bouilleur sera décrit plus en détail ci-après.

L'appareil de distillation comprend en outre une colonne 18 dont l'extrémité supérieure est reliée à un condenseur 19 équipé d'une batterie froide 20 sous la forme d'un serpentin dans lequel circule un fluide réfrigéré, par exemple de l'eau.

Le condenseur 19 est constitué en partie inférieure en tant que bac 21 de stockage de solvant et de décantation, eu égard aux particules d'eau que le solvant peut contenir, et est relié par une conduite de trop plein 22 à un séparateur d'eau 23, du type densimètrique, relié par un conduit 24, dont l'extrémité débouche en partie inférieure du séparateur, à un réservoir 25 de solvant fraîchement distillé. Ce réservoir 25 est relié par un conduit 26 dans lequel est interposée une vanne 27 d'admission de solvant à la cuve 10 de nettoyage et décontamination des vêtements.

Selon une caractéristique importante de l'invention, chaque conteneur de solvant du circuit de régénération du

- 8

0110760

solvant qui vient d'être décrit est relié indépendamment et directement au bouilleur 17 : la cuve à tambour, comme déjà indiqué, par le conduit 14 ; le réservoir 25 par un conduit 28 dans lequel est montée une vanne manuelle de vidange 29 ; le séparateur d'eau 23 par un conduit 30 dans lequel est montée une vanne manuelle de vidange 31 ; et le condenseur de distillation 19 par un conduit 32 dans lequel est montée une vanne manuelle de vidange 33.

Le circuit de régénération du solvant comprend également un réservoir 34 de stockage de l'eau séparée dans le séparateur 23 auquel il est relié par un conduit 35, ce réservoir de stockage d'eau 34 étant lui-même relié indépendamment, par un conduit 36 dans lequel est montée une vanne manuelle de vidange 37, au conduit 14 qui débouche directement dans le bouilleur 17.

A signaler que, comme usuel, le circuit du solvant qui vient d'être décrit comprend également des réservoirs d'adjuvant, par exemple un réservoir 38 d'adjuvant de nettoyage ainsi qu'un réservoir 41 d'adjuvant de rinçage communiquant chacun par un conduit 39, respectivement 42, équipé d'une vanne doseuse 40, respectivement 43, avec le conduit 26 amenant le solvant fraîchement distillé dans la cuve 10.

Selon une autre caractéristique importante de l'invention, la disposition des divers appareils du circuit de régénération du solvant, à savoir condenseur 19, séparateur 23, réservoir de stockage d'eau 34, réservoir de solvant distillé 25, cuve 10 à tambour et bouilleur, les uns par rapport aux autres est telle que le solvant s'écoule par gravité du condenseur jusqu'à la cuve et de cette dernière au bouilleur, d'une part, et que, de même, les différents conteneurs de solvant sont en communication par gravité avec le bouilleur. Les fonds des différents conteneurs de solvant sont avantageusement tronconiques ou pyramidaux pour faciliter l'écoulement par gravité, les diamètres des différents conduits de circulation du solvant étant prévus suffisamment grands dans ce même but.

L'installation comporte également un circuit de récupération du solvant entraîné par l'air de séchage.

Ce circuit comprend un conduit 44 d'arrivée d'air à la cuve à tambour dans lequel est montée une vanne 45 d'arrivée d'air, et un conduit 46 de retour ou reprise d'air, dans lequel est montée une vanne de reprise d'air 47 puis, successivement, un préfiltre 48 dit "à charpies", un filtre 49 à poussières et particules, un ventilateur ou soufflante 50 assurant la circulation de l'air, un séparateur et récupérateur de solvant 51 à batterie froide constituée par un serpentin 52 dans lequel circule un fluide frigorigène et enfin une batterie de réchauffage de l'air 53.

Le récupérateur de solvant 51 est relié par un conduit 54 au conduit 22 d'amenée de solvant dans le séparateur d'eau 23. Il est également relié indépendamment au bouilleur, avec interposition d'une vanne manuelle de vidange 56, par un conduit 55 qui débouche directement dans le conduit 14 conduisant au bouilleur 17.

L'installation selon l'invention, qui fonctionne sous la pression atmosphérique, comprend également un système d'équilibrage de pression comprenant une canalisation 57 reliée, d'une part, au volume intérieur supérieur de la cuve 10 avec interposition d'une vanne 58 d'isolement de la cuve et d'équilibrage de pression et, d'autre part, soit au réservoir 25 par l'intermédiaire d'une vanne trois voies 59 et d'une canalisation 60, soit à un ballon d'expansion 61.

En fait, des canalisations d'équilibrage de pression sont prévues qui relient entre eux les volumes intérieurs de chaque conteneur susceptible d'être rempli de solvant.

L'invention prévoit facultativement d'équiper l'installation d'un dispositif de filtration dans lequel, si désiré pour une décontamination particulièrement poussée, on fait circuler le solvant distillé avant de l'introduire dans la cuve 10. L'intérêt d'une filtration du solvant réalisée après distillation de ce dernier et non au cours de son circuit de nettoyage, réside essentiellement dans la meilleure performance des éléments filtrants qu'on obtient, eu égard à la qualité de la filtration et à la durée de vie des éléments.

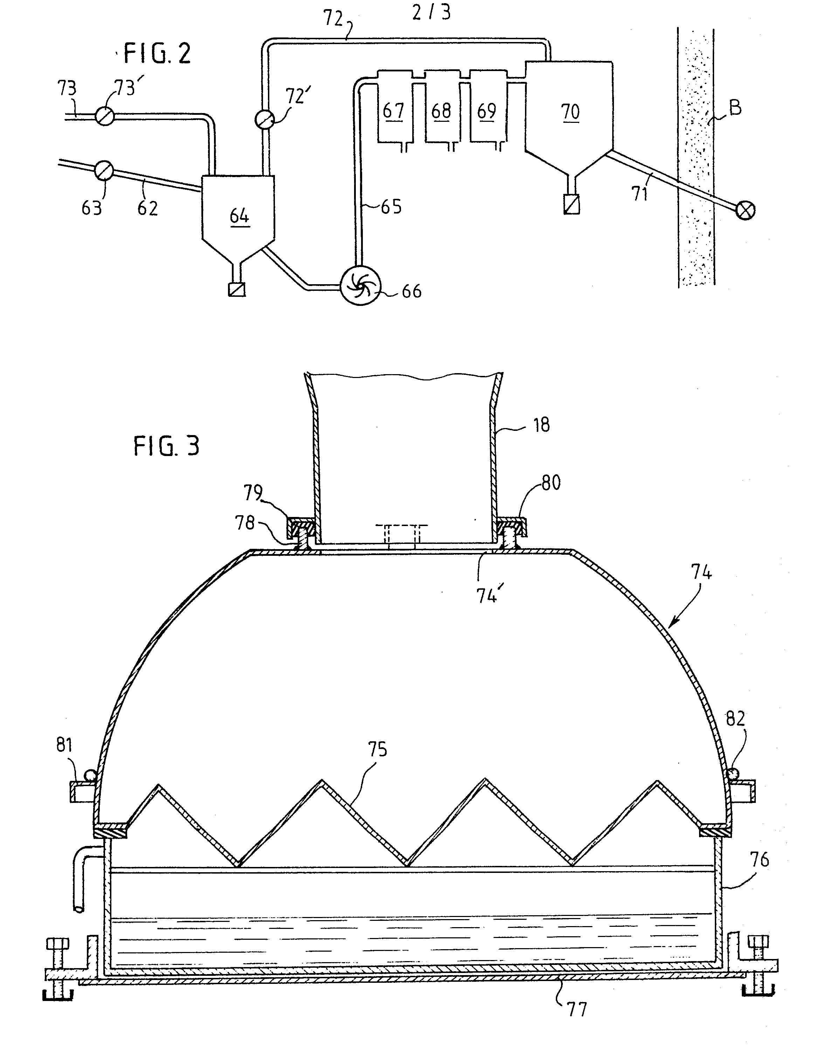

Ce dispositif de filtration représenté sur la figure 2, comprend, relié au réservoir 25 par un conduit 62 équipé d'une vanne 63, un réservoir de solvant 64, faisant office de réservoir tampon, lequel est relié par un conduit 65 comportant une pompe de circulation 66 à plusieurs cartouches de filtration disposées en série 67, 68, 69, de porosité successivement décroissante, par exemple 2 µ , 0,9 µ et 0,3 µ . La dernière cartouche 69 est reliée à un réservoir 70 de solvant distillé filtré, lequel est relié par un conduit 71 à l'entrée de solvant dans la cuve 10. On prévoit également ici des canalisationsd'équilibrage de pression, par exemple une canalisation 72 comportant une vanne 72' entre les réservoirs 70 et 64 et une canalisation 73, dans laquelle est montée une vanne 73', entre les réservoirs 64 et 25.

Les filtres des cartouches 67, 68, 69 sont avantageusement en microfibres de borosilicate, ce qui permet de les vitrifier quand ils sont contaminés par des déchets nucléaires.

Conformément à l'invention, le bouilleur est indépendant de la colonne de distillation.

Dans une première forme de réalisation (figure 3), il comprend un récipient 74, ou bouilleur proprement dit, destiné à contenir le solvant, de conformation sensiblement semi-cylindrique, et dont le fond 75 est conformé de façon à augmenter la surface d'échange, par exemple en dents de scie comme montré sur la figure 3. Ce récipient 74 est percé sur sa paroi supérieure d'un  orifice 74' de communication

0110760

avec la colonne 18 à section avantageusement circulaire. La section de l'orifice et celle de la colonne sont de dimensions appropriées pour, d'une part, assurer un débit de distillation sans freinage des vapeurs de solvant et, d'autre part, permettre d'introduire dans le bouilleur les filtres utilisés, c'est-à-dire les filtres 15, 48, 49, ainsi que les cartouches filtrantes 67, 68, 69.

Le bouilleur 74 est porté par une cuve 76 de fluide chauffant, notamment du type à bain-marie, elle-même supportée par un plateau élévateur 77 soumis par exemple à l'action de vérins, d'excentriques ou d'éléments analogues.

L'orifice 74' est entouré d'un collet circulaire 78 en saillie vers l'extérieur, sur lequel on peut insérer un joint annulaire en néoprène 79 à section en forme de U, destiné à s'adapter à l'intérieur d'une cornière circulaire 80 entourant à l'extérieur l'embouchure de la colonne de distillation 18.

Pour mettre en place un bouilleur, il suffit, après avoir posé un récipient 74 sur la cuve 76, de soulever le plateau 77, le joint 79 et la bride 78 venant s'encastrer dans la cornière 80 et étant appliqués à étanchéité contre cette dernière sous l'action des éléments de levage du plateau 77 : l'étanchéité est ainsi assurée entre l'intérieur du bouilleur 74 et la colonne de distillation 18.

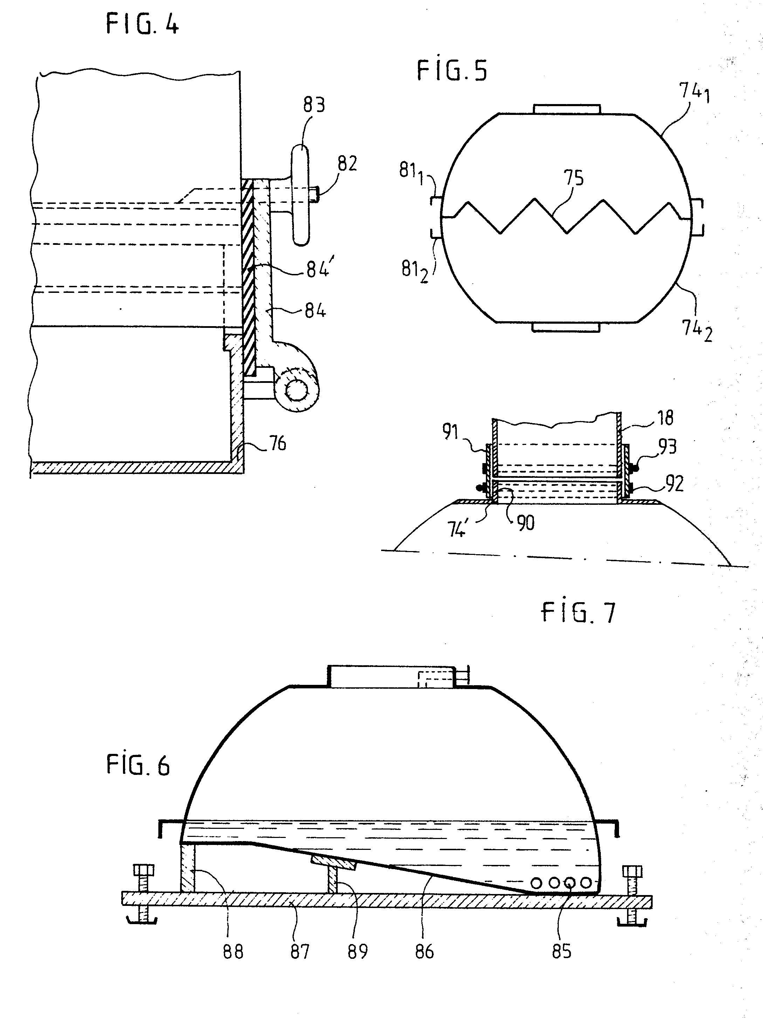

L'invention prévoit également de rapporter sur les parois latérales du bouilleur 74, près du fond 75, des cornières longitudinales 81 pouvant être utilisées à plusieurs fins : elles peuvent permettre la fixation de tiges filetées 82 sur lesquelles sont introduits des écrous 83 de fixation en position de fermeture de portes avant ou arrière 84 de la cuve à bain-marie 76, des plaques 84' en néoprène étant interposées pour former joint entre une porte et la paroi du bouilleur (figure 4) ; elles peuvent servir de points d'accrochage d'anneaux de levage du bouilleur ; lorsque, dans une réalisation préférée de l'invention, deux bouilleurs symétriques $74_1$, $74_2$ (figure 5) peuvent être assemblés par coopération de leurs fonds 75, les cornières $81_1$, $81_2$ peuvent contribuer à la liaison entre les deux bouilleurs par tout moyen de liaison approprié fixé sur chacune d'elles.

Sur la figure 6 est représentée une autre réalisation du bouilleur qui comprend, intégrés, les moyens de chauffage, par exemple un serpentin 85 dans lequel circule tout fluide de chauffage approprié. Le bouilleur, dont le fond présente une partie médiane 86 inclinée pour permettre le logement en partie basse du serpentin,est supporté par un plateau levable 87 par l'intermédiaire d'entretoises 88, 89.

La figure 7 représente une variante du système de fixation amovible du bouilleur sur la colonne. L'orifice 74' est ici bordé par un collet annulaire 90 de même section transversale que la colonne de distillation 18. Un manchon en néoprène 91 peut être emmanché sur le collet 90 et la colonne 18 et raccorder à étanchéité ces deux éléments à l'aide de colliers de serrage 92 et 93. Cette réalisation permet de supprimer l'utilisation d'un plateau de levage du bouilleur, ce dernier pouvant être directement soulevé par des moyens de levage appropriés pour être mis en position de raccordement avec la colonne, ou retiré.

Conformément à l'invention, toutes les parties de l'installation consititutives des circuits régénération et récupération de solvant, c'est-à-dire celles représentées sur la partie gauche de la figure 1, sont rassemblées dans un même module, par exemple logées dans une même armoire destinée à rester en salle "contaminée". La cuve 10 ainsi que les arrivées et retours des différentes canalisations 14, 26, 46, 57 et, éventuellement, les systèmes d'introduction d'adjuvants, constituent un deuxième module, par exemple une armoire fermée à deux ouvertures parmi lesquelles une seule, à savoir celle permettant le déchargement du tambour est en salle "propre". La barrière B sur la figure 1, symbolise la séparation entre les deux modules, c'est-à-dire entre partie contaminée et partie propre de l'installation. Des appareillages de mesure de rayonnement peut être montés dans la partie module propre afin de permettre une appréciation de la qualité de décontamination obtenue en fin d'opération de nettoyage. Ces appareils peuvent commander automatiquement, par tout moyen approprié, le verrouillage, par exemple électromécanique ou autre, de la porte de déchargement de la cuve en cas de décontamination insatisfaisante du module propre.

L'installation fonctionne de la façon suivante, par exemple pour un cycle à deux bains. Les vannes 58, 16, 27, 47 et 45 étant fermées, on charge les vêtements sales et contaminés par l'ouverture d'introduction 13 de la cuve. Après fermeture de la porte et ouverture des vannes 58 et 59 pour mettre en communication d'air le réservoir 25 et la cuve 10, on ouvre la vanne 27 pendant le temps nécessaire à l'écoulement de la quantité de solvant souhaitée dans la cuve et le tambour, la vanne de dosage 40 d'adjuvant étant éventuellement ouverte.

Après fermeture de la vanne 27, et ouverture des vannes 58 et 59 pour la mise en communication de la cuve avec le ballon d'expansion 61, on met en marche le moteur du tambour pour l'opération de lavage souhaitée.

A la fin du cycle de lavage, on ouvre la vanne de vidange 16 pour que le solvant usé s'écoule jusque dans le bouilleur, en faisant tourner rapidement le tambour à la fin de la phase d'écoulement du solvant.

On réalise ensuite un deuxième remplissage du tambour avec du solvant et éventuellement un adjuvant de rinçage, puis, après barbotage à vitesse de rotation appropriée du tambour, on laisse s'écouler le solvant usé comme après l'opération de lavage.

On ferme ensuite les vannes 16, 27 et 58 et on fait démarrer la phase de séchage par introduction d'air. A cet effet, on ouvre les vannes 45 et 47, d'arrivée et de reprise d'air, le ventilateur 50 aspirant l'air et les vapeurs de solvant qui s'échappent des vêtements jusque dans le récupérateur de solvant 51 après passage par les filtres 48 et 49. L'air refroidi après passage dans le récupérateur 51 à condenseur réfrigéré est réchauffé dans là batterie 53 puis rerevient à la cuve à tambour. Pendant toute la durée du séchage, le tambour est mis en rotation.

A la fin du cycle de séchage, les vannes 16, 27, 45, 47 et 58 étant fermées, on déverrouille la porte 12 de déchargement des vêtements pour sortir ces derniers en salle propre.

Dès qu'une quantité appropriée de solvant usé est introduite dans le bouilleur 17, la distillation est déclenchée automatiquement pour régénérer le solvant, et envoyer du solvant fraîchement distillé et exempt d'eau dans le réservoir 25. Les déchets contaminés restent dans le bouilleur 17.

Si l'on observe une contamination d'un conteneur de solvant quelconque, par exemple du séparateur d'eau 23, il suffit, par ouverture de la vanne manuelle 31, de vidanger le séparateur jusque dans le bouilleur 17 et de distiller le solvant de vidange, ce qui permet de remplir le séparateur de solvant fraîchement distillé. L'opération est alors recommencée jusqu'à ce qu'aucune contamination ne puisse plus être détectée dans le séparateur. On agit de même en cas de contamination de l'un quelconque des réservoirs de solvant, à savoir condenseur 19, réservoir 25, récupérateur 51, en vidangeant ces derniers par ouverture de la vanne manuelle de vidange associée. Pour nettoyer correctement le tambour, on y introduit une quantité appropriée de solvant et l'on fait tourner le tambour à vitesse rapide, après quoi on laisse s'écouler le solvant dans le bouilleur.

Quand plusieurs cycles de nettoyage et décontamination et/ou plusieurs cycles de nettoyage de l'un quelconque des conteneurs de solvant ont été réalisés et que le bouilleur est rempli de déchets contaminés, on désolidarise ce dernier de la colonne de distillation 18 par descente du plateau de levage qui le supporte, on y introduit éventuellement les cartouches des filtres 48 et 49 ainsi que celles des filtres 67, 68, 69, on ferme à étanchéité l'ouverture du bouilleur et on le jette. On remet en place un nouveau bouilleur en changeant le joint d'étanchéité 79.

Lorsque l'installation est utilisée pour une décontamination nucléaire, on rassemble avantageusement par leurs fonds deux bouilleurs 17 remplis de déchets contaminés et on les noie dans du béton, comme usuel pour les déchets nucléaires.

L'invention fournit ainsi une installation de fonctionnement simple et sûr en ceci que chacune de ses parties peut être entretenue et nettoyée de façon indépendante et sans difficulté, que tous les déchets contaminés peuvent être rassemblés en un seul et même point, à savoir le bouilleur, lequel peut alors être jeté.

16

Revendications

1) Procédé de nettoyage et décontamination particulaire de vêtements, notamment de vêtements contaminés par des particules radioactives, du type à milieu solvant de nettoyage à sec et à fonctionnement sous la pression atmosphérique, selon lequel le solvant circule en circuit fermé et est purifié par distillation entre la sortie et l'entrée de la cuve de nettoyage, l'air de séchage circulant également en circuit fermé et étant séparé du solvant entre la sortie et l'entrée de la cuve, caractérisé en ce qu'on nettoie indépendamment, quand le besoin s'en fait sentir, chaque conteneur de solvant de l'un ou l'autre des circuits, en vidangeant ledit conteneur directement au poste de distillation et en remplissant ledit conteneur de solvant distillé.

2) Procédé selon la revendication 1, caractérisé en ce que les déchets contaminés obtenus au cours de plusieurs cycles de nettoyage et de décontamination de vêtements et/ou de nettoyage de l'installation, sont collectés en un seul et même point avant d'être éliminés.

3) Procédé selon la revendication 1 ou 2, caractérisé en ce que la circulation du solvant, en dehors du poste de distillation, s'effectue uniquement par gravité.

4) Procédé selon l'une quelconque des revendications précédentes, caractérisé en ce qu'on fait subir au solvant distillé une filtration, en dehors de tout cycle de nettoyage de vêtements, avant de l'introduire dans la cuve pour une opération de nettoyage.

5) Installation de nettoyage et décontamination particulaire de vêtements, notamment de vêtements contaminés par des particules radioactives, du type à milieu solvant de nettoyage à sec et fonctionnant sous la pression atmosphérique, comprenant une cuve (10) de nettoyage interposée d'une part dans un circuit de régénération du solvant du type à appareil de distillation (17, 18), condenseur (19), séparateur d'eau (23), réservoir de solvant (25) et, d'autre part, dans un circuit de récupération du solvant entraîné par l'air de séchage du type à condenseur (51), caractérisé en ce que chaque conteneur de solvant (19, 23, 25, 51) est relié indépendamment et directement, avec interposition d'une vanne, au bouilleur (17) de l'appareil de distillation à des fins de nettoyage.

6) Installation selon la revendication 5, caractérisée en ce que les différents conteneurs (19, 23, 25, 10, 17, 51) sont dans une dispostion relative telle que la circulation du solvant s'effectue par gravité du condenseur (19) au bouilleur (17) et de chaque conteneur de solvant au bouilleur.

7) Installation selon la revendication 5 ou 6, caractérisé en ce que le circuit de récupération comprend un récupérateur à batterie réfrigérée (51) assurant la condensation des vapeurs de solvant, le récupérateur de solvant étant relié à l'amont du séparateur d'eau (23) du circuit de régénération du solvant.

8) Installation selon l'une quelconque des revendications 5 à 7, caractérisé en ce qu'elle comprend un réservoir de récupération d'eau (34) disposé en aval du séparateur d'eau (23) et directement relié au bouilleur (17).

9) Installation selon l'une quelconque des revendications 5 à 8, caractérisée en ce que le bouilleur (17) est monté amovible sur la colonne de distillation (18).

10) Installation selon la revendication 9, caractérisée en ce que le bouilleur est supporté par un plateau de levage (77).

11) Installation selon la revendication 9, caractérisée en ce que le bouilleur comprend une cuve (74) de collecte des solvants usés et des déchets contaminés qui est indépendante des moyens de chauffage.

12) Installation selon la revendication 11, caractérisée en ce que les moyens de chauffage sont une cuve à bain-marie (76).

13) Installation selon l'une quelconque des revendications 5 à 12, caractérisée en ce qu'entre le réservoir de solvant distillé (25) et la cuve (10) est interposé un dispositif de filtration à plusieurs cartouches (67, 68, 69) de porosité décroissante.

14) Installation selon la revendication 13, caractérisée en ce que les filtres des cartouches filtrantes sont en fibres de borosilicate.

15) Installation selon l'une quelconque des revendications 5 à 14, caractérisée en ce que l'ouverture du bouilleur (17) est suffisante pour qu'on puisse y introduire les divers éléments filtrants prévus dans les circuits de récupération ou de régénération du solvant après qu'ils ont été contaminés.

16) Installation selon l'une quelconque des revendications 5 à 15, caractérisée en ce que le bouilleur est jetable après qu'on y a rassemblé tous les déchets contaminés.

17) Installation selon l'une quelconque des revendications 6 à 16, caractérisée en ce que les fonds des différents conteneurs de solvant sont tronconiques ou pyramidaux de manière à faciliter l'écoulement par gravité du solvant.

18) Installation selon l'une quelconque des revendications 5 à 17, caractérisée en ce que les éléments des circuits de régénération et de récupération du solvant sont rassemblés dans un même module destiné à rester en salle contaminée, le tambour de lavage et ses départs et retours

0110760

de canalisations diverses constituant un deuxième module à deux ouvertures dont seule l'ouverture de déchargement des vêtements est destinée à être en communication avec la salle propre.

19) Installation selon la revendication 18, caractérisée en ce que le module propre comprend des moyens de mesure de rayonnement permettant d'apprécier la qualité de décontamination, ces moyens pouvant commander automatiquement le verrouillage de la porte de déchargement en salle propre de la cuve en cas de décontamination insatisfaisante.

FIG. 1

0110760

FIG. 2

FIG. 3

FIG. 4

FIG. 5

FIG. 7

FIG. 6

Office européen
des brevets

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | FR-A-1 055 438 (FAUDI FEINBAU) <br> * En entier * | 1-7 | D 06 F 43/08 <br> G 21 F 9/00 <br> G 21 F 9/08 <br> B 01 D 3/00 |
| | --- | | |
| A | FR-A-2 477 757 (HEALTH PHYSICS SYSTEMS) <br> * Revendications * | 1,2,4, 5 | |
| | --- | | |
| A | DE-A-1 614 497 (SIEMENS) <br><br> * En entier * | 1-3,5- 12,15, 16 | |
| | --- | | |
| A | US-A-3 404 722 (BLOORE) <br><br> * En entier * | 1-3,5- 7,16 | |
| | --- | | DOMAINES TECHNIQUES RECHERCHES (Int. Cl. ³) |
| A | FR-A-1 470 582 (KENDALL) <br><br> * En entier * | 1-3,5- 7,19 | D 06 F <br> G 21 F |
| | --- | | |
| A | FR-A-2 116 646 (BOUFFARTIGUE) <br><br> * Revendication * | 1-3,5- 8 | A 62 D <br> D 06 L |
| | --- | | |
| A | FR-A-2 174 760 (ROBATEL) <br> * Page 5, lignes 27-29, 39-40; page 6, lignes 1-3 * | 1-8 | |
| | ---           -/- | | |

Le présent rapport de recherche a été établi pour toutes les revendications

| Lieu de la recherche <br> LA HAYE | Date d'achèvement de la recherche <br> 15-02-1984 | Examinateur <br> D HULSTER E.W.F. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82

**Office européen des brevets**

# RAPPORT DE RECHERCHE EUROPEENNE

EP 83 40 2178

| Catégorie | Citation du document avec indication, en cas de besoin, des parties pertinentes | Revendication concernée | CLASSEMENT DE LA DEMANDE (Int. Cl. 3) |
|---|---|---|---|
| | **DOCUMENTS CONSIDERES COMME PERTINENTS** | | Page 2 |
| A | FR-A-2 397 858  (PELT & HOOYKAAS) <br> * Revendications 1,2,6 * | 14 | |
| A | DE-A-1 410 806  (BÖWE BÖHLER & WEBER) <br> * Revendications; figures * | 18 | |
| A | DE-A-1 802 621 (EXPRESS-REINIGUNG THEO FLAMM) | | |
| A | GB-A-1 408 263  (NEIL & SPENCER) | | |
| A | FR-A-2 035 303  (APAW) | | |

**DOMAINES TECHNIQUES RECHERCHES (Int. Cl. 3)**

Le présent rapport de recherche a été établi pour toutes les revendications

| Lieu de la recherche | Date d'achèvement de la recherche | Examinateur |
|---|---|---|
| LA HAYE | 15-02-1984 | D HULSTER E.W.F. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82